# DEMANDE DE BREVET EUROPEEN

(11) **EP 2 355 445 A1**
(43) Date de publication de la demande: **10.08.2011**
(21) Numéro de dépôt: 11152951.7
(22) Date de dépôt: 01.02.2011
(51) Int. Cl.: H04L 29/06

(54) **Outil de simulation du comportement d'un terminal recevant un signal transmis sous la forme de paquets de données en mode continu**

(30) Priorité: 08.02.2010 FR 1050849
(71) Demandeur: Alcatel Lucent, 75007 Paris (FR)
(72) Inventeur: Hubbe, Pascal, 91620 Nozay (FR); Leprovost, Yann, 91620 Nozay (FR)
(74) Mandataire: Sciaux, Edmond

(57) **Abrégé**

Cet outil de simulation comporte :
- des moyens (33) pour simuler une mémoire tampon destinée à stocker des paquets en associant chaque paquet à une première étiquette temporelle (t_{Ci}) indiquant l'instant où a été capturé et échantillonné une portion de signal, ces moyens comportant des paramètres réglables pour définir la capacité de la mémoire tampon et définir des règles pour la récupération consécutive à un assèchement de la mémoire tampon,
- et des moyens (35-37) pour simuler un lecteur lisant dans cette mémoire tampon, comportant :
-- des moyens (35) pour calculer pour chaque paquet reçu un instant théorique (t_{Pi}) où il devrait être restitué par cette mémoire tampon, en respectant l'ordre et la cadence définis par les premières étiquettes temporelles ;
-- des moyens (35) pour calculer un instant (t_{B}) où devra être restitué réellement le premier paquet à restituer juste après le démarrage de la lecture ou juste après une période de récupération consécutive à un assèchement de la mémoire tampon, en fonction de règles de fonctionnement prédéterminées pour la mémoire tampon à simuler ;
-- et des moyens (35) pour calculer, pour chaque paquet suivant le premier paquet à restituer juste après le démarrage de la lecture ou juste après une période de récupération, un instant (t_{Di}) où il devra être restitué réellement par cette mémoire tampon, en respectant l'ordre et la cadence définis par les premières étiquettes temporelles.

## Description

L'invention concerne un outil de simulation du comportement d'un terminal recevant un signal transmis sous la forme de paquets de données en mode continu.

La transmission en mode continu (en anglais : streaming) permet à un internaute de lire un fichier (audio ou vidéo) pratiquement en temps réel, sans avoir à attendre la fin de la transmission de l'ensemble des données constituant ce fichier. Elle s'oppose ainsi au téléchargement classique qui nécessite de récupérer l'ensemble des données d'un morceau de musique ou d'une séquence vidéo avant de pouvoir l'écouter ou la regarder.

Les variations (en anglais : jitter) de la durée de transmission à travers un réseau de transmission de paquets de données peuvent provoquer des interruptions dans la restitution du son (coupures) ou de la vidéo (image figée). Pour éviter ces interruptions, les données sont inscrites et lues en continu dans une mémoire tampon, dans le terminal récepteur. Elles sont rapidement transférées à un logiciel lecteur (pour restituer un son ou une séquence vidéo), les données stockées en mémoire tampon étant remplacées continuellement par de nouvelles données. La durée de stockage en mémoire tampon est variable ; elle est calculée dynamiquement de façon à compenser les variations de la durée de transmission affectant les données reçues par le terminal. La durée de stockage maximale dans une telle mémoire tampon est de l'ordre de quatre à huit secondes.

La transmission en mode continu est particulièrement adaptée à la diffusion d'un contenu dont la taille totale, ou la durée de lecture, ne rendraient pas pratique le téléchargement préalable du fichier entier avant sa lecture. Elle permet un accès plus rapide au contenu diffusé et permet donc la diffusion en direct ou en léger différé. De ce fait, elle est très utilisée pour la diffusion de contenus vidéo et musicaux via Internet.

La lecture en mode continu fonctionne selon le protocole client-serveur. Le contenu est mis à disposition sur un serveur. Le client souhaitant accéder au contenu envoie une requête pour en récupérer une petite partie, à l'endroit du contenu où il souhaite commencer la lecture. Les données reçues en réponse sont placées dans la mémoire tampon. Lorsqu'il y a suffisamment de données dans cette mémoire pour permettre de lire correctement le début du fichier audio ou vidéo, la lecture démarre. En arrière-plan, l'écriture du flux de données dans la mémoire tampon se poursuit afin d'alimenter sans cesse la mémoire tampon avec la suite du fichier.

Les transmissions et communications entre serveur et client peuvent utiliser les protocoles suivants : RTP, RTSP (standards normalisés par l'IETF) ou MMS (propriétaire Microsoft) ou RTMP (propriétaire Adobe Systems). Le protocole de transmission attribue un numéro d'ordre et une étiquette temporelle (heure de capture et d'échantillonnage) à chaque paquet de donnée au moment de sa transmission. A la réception, le logiciel lecteur utilise le numéro d'ordre et/ou l'étiquette temporelle pour relire les paquets, dans la mémoire tampon, dans le bon ordre ; et il utilise les étiquettes temporelles pour relire chaque paquet à un instant tel que le délai entre la capture du paquet et sa lecture dans la mémoire tampon est égale à une constante, par exemple dix secondes, qui est choisie au moins égale à la variation de retard maximale que l'on souhaite pouvoir compenser.

La taille de la mémoire tampon est donc choisie en fonction de la variation de retard maximale que l'on souhaite pouvoir compenser. Elle est différente selon les lecteurs. Cette taille détermine, pour le début de la transmission, la durée pendant laquelle le son ou la vidéo n'est pas restitué ; et, à la fin de la transmission, la durée pendant laquelle le son ou la vidéo continue à être restitué, après interruption de la transmission.

En raison des latences créées par la transmission, les opérations de codage/décodage effectuées sur les signaux, et le délai variable de stockage dans la mémoire tampon, un retard de 5 à 35 secondes (voire plus) peut intervenir entre le signal émis par une source et le signal restitué par le lecteur.

Le but de l'invention est de proposer un outil de simulation du comportement d'un terminal recevant un signal vidéo transmis en mode continu. Il doit permettre d'analyser la qualité de la vidéo que restituerait un terminal donné s'il était connecté à un site donné via un réseau donné. Il doit permettre de faire cette analyse pour un grand nombre de terminaux différents sans disposer de ces terminaux, mais en connaissant les caractéristiques de chaque terminal : capacité de la mémoire tampon, et procédé de récupération en cas d'assèchement de la mémoire tampon. Ces terminaux sont par exemple des téléphones portables aptes à recevoir des vidéos en mode continu. Cet outil doit permettre de prévoir quels terminaux donneront une restitution correcte dans un réseau donné, ou permet de prévoir quelle capacité de mémoire devra être installée dans un futur terminal pour obtenir un niveau de qualité donné dans un réseau donné.

Un second but de l'invention est d'obtenir le résultat de cette analyse rapidement, c'est-à-dire sans attendre pendant toute la durée de 5 à 35 secondes (voire plus) qui peut intervenir entre le début de la transmission et le début de la restitution par un lecteur.

L'objet de l'invention est un outil de simulation du comportement d'un terminal recevant un signal transmis sous la forme de paquets en mode continu, caractérisé en ce qu'il comporte :
- des moyens pour simuler plusieurs transmissions successives identiques, comportant :
   -- des moyens pour recevoir un signal réellement transmis, à travers un réseau, sous la forme de paquets de données en mode continu, ces paquets étant affectés par des variations du temps de transmission à travers ce réseau,
   -- des moyens pour stocker tous les paquets reçus en associant à chaque paquet une première étiquette temporelle indiquant l'instant où a été capturé et échantillonné une portion de signal, et une seconde étiquette temporelle indiquant à quel instant ce paquet est sorti dudit réseau,
   -- et des moyens pour lire tous les paquets stockés en reconstituant, grâce aux premières et secondes étiquettes temporelles, les mêmes variations de durée de transmission que pendant la transmission réelle ;
- des moyens pour simuler une mémoire tampon destinée à stocker des paquets en associant chaque paquet à la première étiquette temporelle indiquant l'instant où a été capturé et échantillonné une portion de signal, ces moyens comportant des paramètres réglables pour définir la capacité de la mémoire tampon et définir des règles pour la récupération consécutive à un assèchement de la mémoire tampon,
- et des moyens pour simuler un lecteur lisant dans cette mémoire tampon, comportant :
   -- des moyens pour calculer pour chaque paquet reçu un instant théorique où il devrait être restitué par cette mémoire tampon, en respectant l'ordre et la cadence définis par les premières étiquettes temporelles ;
   -- des moyens pour calculer un instant où devra être restitué réellement le premier paquet à restituer juste après le démarrage de la lecture ou juste après une période de récupération consécutive à un assèchement de la mémoire tampon, en fonction de règles de fonctionnement prédéterminées pour la mémoire tampon à simuler ;
   -- et des moyens pour calculer, pour chaque paquet suivant le premier paquet à restituer juste après le démarrage de la lecture ou juste après une période de récupération, un instant où il devra être restitué réellement par cette mémoire tampon, en respectant l'ordre et la cadence définis par les premières étiquettes temporelles.

L'outil ainsi caractérisé permet de simuler aisément le comportement de toutes sortes de terminaux parce qu'il comporte des moyens pour simuler une mémoire tampon, qui comportent des paramètres réglables pour définir la capacité de la mémoire tampon et définir des règles pour la récupération consécutive à un assèchement de la mémoire tampon. D'autre part, il permet de comparer les comportements de ces différents terminaux dans des conditions rigoureusement identiques parce qu'il comporte des moyens pour simuler plusieurs transmissions successives rigoureusement identiques, et les défauts affectant ces transmissions sont parfaitement conformes à la réalité puisque les variations du retard sont celles enregistrées lors d'une transmission réelle.

Dans des modes de réalisation préférés, l'outil selon l'invention comprend une ou plusieurs des caractéristiques suivantes :
Les moyens pour calculer pour chaque paquet reçu un instant théorique où il devrait être restitué par cette mémoire tampon, en respectant l'ordre et la cadence définis par les premières étiquettes temporelles, comportent des moyens pour additionner une constant à la valeur de la première étiquette temporelle associée à ce paquet.

Les moyens pour calculer, pour chaque paquet suivant le premier paquet à restituer juste après le démarrage de la lecture ou juste après une période de récupération, un instant où il devra être restitué réellement par cette mémoire tampon, en respectant l'ordre et la cadence définis par les premières étiquettes temporelles, comportent des moyens pour calculer cet instant selon la formule : t_{Di} = t_{B} + (t_{Pi} - t_{PB})
où t_{PB} est l'instant d'affichage théorique calculé pour ledit premier paquet, où t_{Pi} est l'instant d'affichage théorique calculé pour le paquet considéré, et où t_{B} est l'instant où a (re)commencé la restitution, t_{B} étant réactualisé chaque fois que la restitution redémarre après un assèchement de la mémoire tampon.

L'invention sera mieux comprise et d'autres caractéristiques apparaîtront à l'aide de la description ci-dessous et des figures l'accompagnant :
- La figure 1 représente deux graphes qui illustrent l'effet des variations de durée de transmission des paquets de données, et l'effet régulateur d'une mémoire tampon.
- La figure 2 représente un exemple de réalisation et d'utilisation de l'outil selon l'invention.
- La figure 3 représente fonctionnellement un exemple de réalisation de la mémoire tampon de l'outil selon l'invention.
- La figure 4 représente un diagramme temporel qui illustre le fonctionnement de cet exemple de réalisation lorsque les variations de durée de transmission sont telles que la mémoire tampon ne s'assèche pas.
- La figure 5 représente un diagramme temporel qui illustre le fonctionnement de cet exemple de réalisation lorsque les variations de durée de transmission sont telles que la mémoire tampon s'assèche pendant un certain temps.

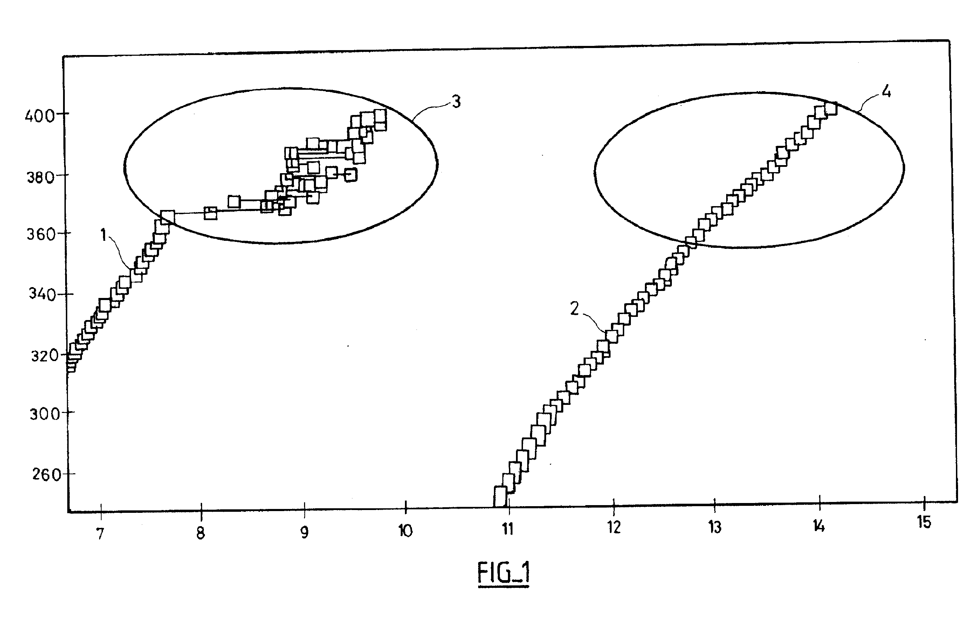

Sur la **figure 1****,** l'axe des abscisses représente le temps exprimé en secondes, et l'axe des ordonnées représente un nombre des paquets de données reçus à un instant donné, compté à partir d'un instant 0. Le chaînage entre les points de chaque graphe correspond à l'ordre des paquets.

Le graphe 1 illustre la réception de paquets à la sortie d'un réseau de transmission de paquets de données utilisant le protocole Internet et le protocole de transport de données en temps réel RTP (Real-time Transport Protocol) normalisé par la norme RFC 3550. Une première partie du graphe 1 est assez régulière car la durée de transmission à travers ce réseau a été à peu près constante. Une seconde partie 3 du graphe 1 est irrégulière, elle montre que la durée de transmission a beaucoup fluctué, à telle point que certains paquets arrivent en désordre.

Le graphe 2 illustre l'effet régulateur d'une mémoire tampon en montrant la sortie des paquets à la sortie d'une mémoire tampon lorsqu'elle ne s'assèche jamais. L'ensemble du graphe 2 est régulier car les paquets sont lus dans la mémoire tampon à une cadence constante et en respectant l'ordre initial des paquets. En particulier, la seconde partie 4 du graphe 2, qui correspond aux paquets de la partie 3 du graphe 1, ne comporte aucune discontinuité ni désordre. Cet effet de régulation est obtenu parce que la durée maximale de stockage dans la mémoire a été choisie suffisante pour compenser les variations maximales de la durée de transmission. Si ce n'était pas le cas, il y aurait des interruptions du flot de paquets, dues à un assèchement de la mémoire tampon.

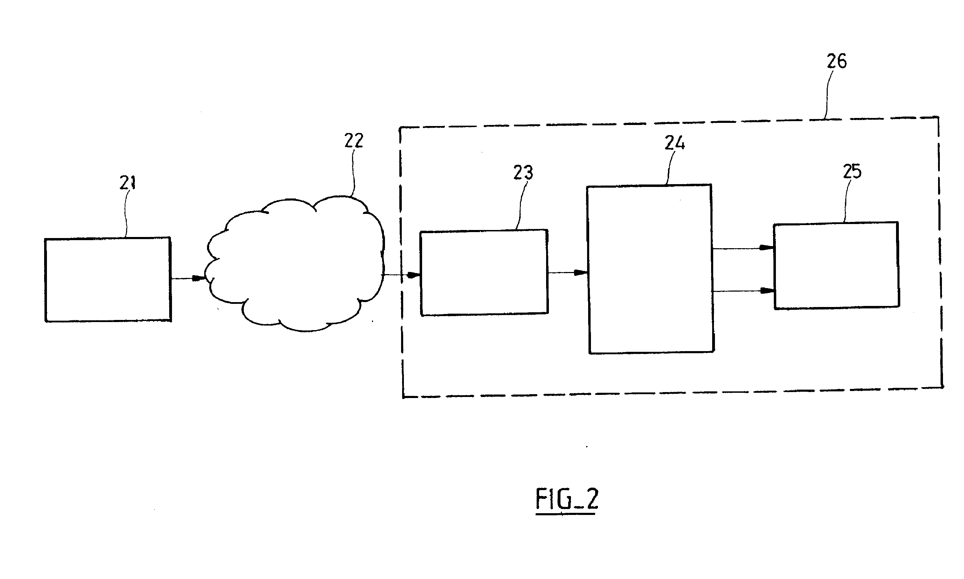

La **figure 2** représente un exemple de réalisation et d'utilisation de l'outil selon l'invention. Il utilise une source vidéo 21 pour créer une collection de paquets de données de test. C'est, dans cet exemple, un site web accessible via le réseau Internet 22, et qui émet un flot de paquets de données en mode continu, par exemple au format MPEG2TS, avec le protocole de transport RTP classique. Les paquets sortent du réseau Internet 22 de manière asynchrone. Ils sont affectés par des variations du temps de transmission, et des désordres. A la sortie du réseau Internet 22, les paquets sont reçus par un exemple de réalisation 26 de l'outil selon l'invention.

Cet exemple de réalisation 26 comporte une mémoire de stockage 23 et des moyens de commande de lecture/écriture (non représentés) couplés à cette mémoire 23 et permettant de simuler à volonté une transmission de paquets de données à travers un réseau de transmission de paquets de données en mode continu. Un utilisateur de l'outil peut ainsi simuler une pluralité de transmissions successives et identiques.

Les paquets de données destinés à constituer des paquets de test sont d'abord inscrits dans la mémoire de stockage 23, en étant chacun associé avec une première étiquette temporelle dite de capture parce qu'elle a été attribuée au moment de la capture et de l'échantillonnage d'une portion d'image, conformément au protocole RTP. D'autre part, chaque paquet inscrit dans la mémoire de stockage 23 est associé à une deuxième étiquette temporelle dite de réception parce qu'elle est attribuée au moment de la sortie du réseau Internet 22, par les moyens de commande de lecture/écriture (non représentés) couplés à cette mémoire 23. Des paquets sont ainsi enregistrés continument pendant un quart d'heure par exemple. Ils seront relus plus tard, par les moyens de commande de lecture/écriture (non représentés) couplés à cette mémoire de stockage 23, en reconstituant, grâce aux premières et deuxièmes étiquettes temporelles, les mêmes variations de durée de transmission que pendant la transmission réelle.

Les paquets enregistrés dans la mémoire de stockage 23 constituent une collection de paquets de test qui permettra de tester différentes simulations de mémoire tampon, donc de tester virtuellement différents terminaux, en ayant rigoureusement les mêmes paquets de test, avec les mêmes variations de durée de transmission, et les mêmes désordres, pour tous les tests. D'autre part, la mémoire de stockage 23 est avantageuse parce qu'elle permet d'obtenir le résultat de l'analyse rapidement, une fois que le stockage a été fait : Il n'y a pas besoin d'attendre pendant toute la durée de 5 à 35 secondes (voire plus) qui peut intervenir entre le début d'une transmission réelle et le début de la restitution par un lecteur classique. En effet, la simulation et l'affichage peuvent démarrer quasi-instantanément dés lors que tous les paquets sont déjà tous disponibles dans la mémoire de stockage 23.

Un dispositif de simulation 24 est relié à la sortie de la mémoire de stockage 23. Il simule une mémoire tampon vidéo et une mémoire tampon audio afin de tester le comportement de différents terminaux, en permettant de faire varier les paramètres de la mémoire tampon vidéo simulée et de la mémoire tampon audio simulée : capacité de cette mémoire, et paramètres du comportement de récupération dans le cas d'un assèchement de chaque mémoire tampon. Les fonctions du dispositif de simulation 24 sont réalisées par simulation logicielle.

Le dispositif de simulation 24 reçoit une suite de paquets lus dans la mémoire de stockage 23, avec les même variations de débit et les mêmes désordres que s'ils étaient reçus directement du réseau de transmission de données 22. Les mémoires tampons simulées sont associées à des moyens de commande de lecture qui relisent les paquets, en régulant leur flux, et restituent un signal vidéo et un signal audio, séparément, à un dispositif 25 d'affichage et de reproduction sonore.

Par exemple, l'outil selon l'invention est réalisé sous la forme d'un logiciel exécuté sur un ordinateur personnel, et le dispositif 25 est constitué par l'écran et les haut-parleurs de cet ordinateur personnel.

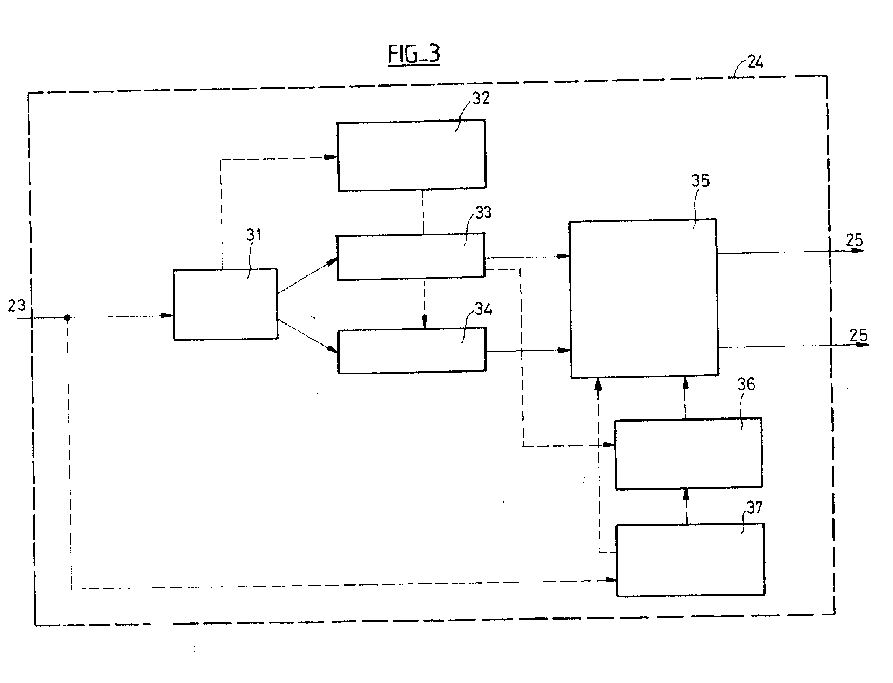

La **figure 3** représente fonctionnellement un exemple de réalisation du dispositif de simulation 24 de l'outil selon l'invention. Il comporte :
- Un module logiciel démultiplexeur 31 qui reçoit les paquets de données affectés de variations du temps de transmission, et de désordres, fournis par la mémoire de stockage 23. Ce module 31 extrait de chaque paquet de données reçu, des données vidéo et des données audio. Il constitue des flux séparés : un flux de paquets de données vidéo et un flux de paquets de données audio.
- Un module logiciel 32 génère un premier signal d'horloge qui est un signal de période constante égal à la période moyenne de réception des paquets par le module démultiplexeur 31. Le flux de paquets de données vidéo et le flux de paquets de données audio sont synchronisés sur ce signal d'horloge.
- Un module logiciel 33 simule une mémoire tampon vidéo permettant de stocker les paquets de données vidéo. Tous ses paramètres sont réglables.
- Un module logiciel 34 simule une mémoire tampon audio permettant de stocker les paquets de données audio. Tous ses paramètres sont réglables.
- Un module logiciel 35 simule un lecteur multimédia, permettant de restituer en synchronisme un signal vidéo et un signal audio exploitables par le dispositif de restitution 25. Pour chaque paquet vidéo, il détermine l'instant t_{D} où devra être restitué ce paquet vidéo ainsi que le paquet audio correspondant. Il associe cet instant t_{D} à ces deux paquets respectivement dans le module logiciel 33 qui simule une mémoire tampon vidéo, et dans le module logiciel 34 qui simule une mémoire tampon audio. Lorsque l'instant t_{D} arrive, le module logiciel 35 relit ces deux paquets et les fournit au dispositif de restitution 25.
- Un module logiciel 36 qui est une machine d'états collaborant avec le module 35 pour simuler les états d'un lecteur multimédia. Dans un exemple de réalisation simple, il a deux états : Arrêt ou Lecture. Il passe de l'état Lecture à l'état Arrêt en cas d'assèchement de la mémoire tampon vidéo, ou en fin de test. Il passe de l'état Arrêt à l'état Lecture au démarrage du test, c'est à dire dés que le niveau de remplissage de la mémoire tampon a atteint une valeur prédéterminée (réglable), ou lors de la récupération après un assèchement de la mémoire tampon vidéo 33. Il reçoit un signal fourni par le module logiciel 33 qui simule une mémoire tampon vidéo, ce signal indiquant s'il y a un assèchement de la mémoire tampon vidéo. La possibilité d'assèchement de la mémoire audio simulée par le module 34 n'est pas prise en compte car elle est beaucoup moins probable qu'un assèchement de la mémoire vidéo.
- Un module logiciel 37 génère un second signal d'horloge pour le module logiciel 35 et pour le module logiciel 36, à partir des étiquettes temporelles de capture qui sont extraites des paquets arrivant à l'entrée du module logiciel démultiplexeur 31.

Dans d'autres exemples de réalisation, on peut prendre en compte aussi le risque d'assèchement de la mémoire audio. L'évènement de basculement de l'état lecture à arrêt de la machine d'état est alors une condition du type : « mémoire vidéo vide ou mémoire audio vide ».

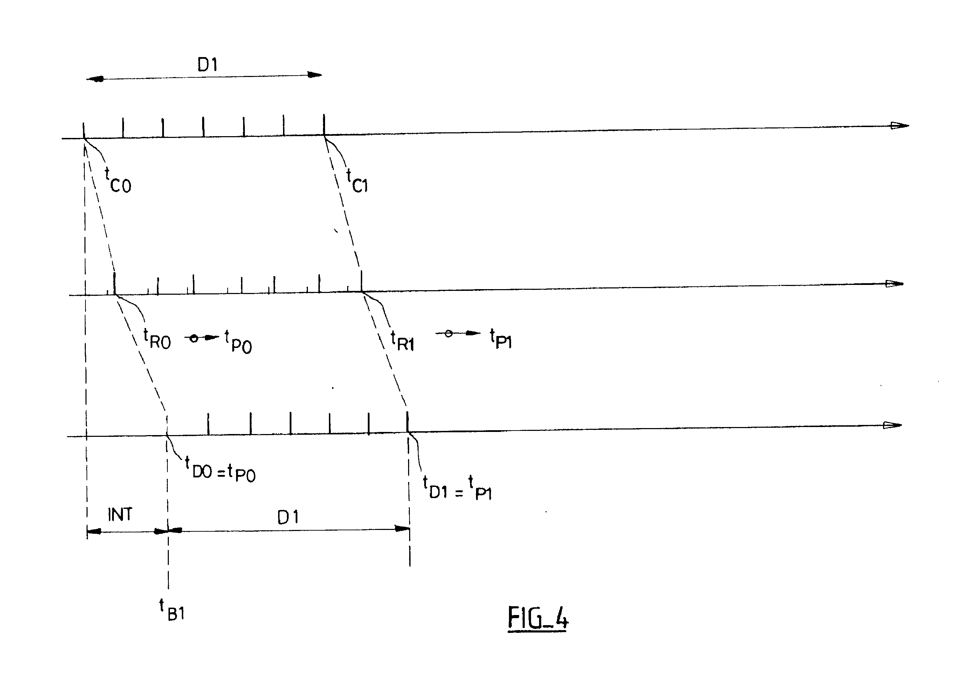

La **figure 4** représente un diagramme temporel qui illustre le fonctionnement de cet exemple de réalisation pour une première suite de paquets où les variations de durée de transmission sont telles que la mémoire tampon vidéo 33 ne s'assèche pas. La première ligne représente les instants t_{C} auxquels les paquets sont émis dans le réseau de transmission. La deuxième ligne représente les instants t_{R} où ces mêmes paquets sont reçus à la sortie du réseau. Comme cela été mentionné au-dessus, ils seront relus plus tard, dans la mémoire de stockage 23, en reconstituant, grâce aux premières et deuxièmes étiquettes temporelles associées à ces paquets, les mêmes variations de durée de transmission que pendant la transmission réelle. Cette deuxième ligne représente donc aussi les instants où ces mêmes paquets sont transmis de la sortie de la mémoire de stockage 23, à l'entrée de l'outil 24 lors de la simulation.

Une suite de portions d'image sont capturées et échantillonnées aux instants t_{C0}, ..., t_{C1} respectivement. Une suite continue de paquets de données correspondant est émise à l'entrée du réseau 22. Ces paquets sont reçus à l'entrée de l'outil 24 avec des retards variables, à des instant t_{R0}, ..., t_{R1}, éventuellement en désordre. Le module 35 qui simule un lecteur multimédia calcule pour chaque paquet un instant théorique t_{P} où le paquet devrait être lu dans la mémoire tampon 33 et être affiché par le dispositif 25. L'instant t_{C} et l'instant t_{P} correspondant sont séparés d'un intervalle fixe INT. L'instant t_{P} est calculé en ajoutant à l'instant de capture et d'échantillonnage t_{C} une constante INT qui est choisie supérieure à la variation maximale de la durée de transmission à travers le réseau, qu'on souhaite compenser au moyen de la mémoire tampon. Bien entendu, la capacité de la mémoire tampon vidéo 33 est choisie en fonction de cette constante INT, de sorte qu'elle ne se sature pas.

Par exemple, le premier paquet de cette suite est reçu à l'instant t_{R0} et il devrait être lu théoriquement à un instant t_{P0} = t_{C0}+ INT, t_{C0} étant indiqué par la première étiquette temporelle associée à ce paquet ; et le dernier paquet de cette suite est reçu à l'instant t_{R1} et il devrait être lu théoriquement à un instant T_{P1} = t_{C1}+ INT, t_{C1} étant indiqué par la première étiquette temporelle associée à ce dernier paquet.

La troisième ligne représente les instants t_{D} où sont réellement restitués les paquets au dispositif 25 d'affichage et de reproduction sonore. Pour cette première suite de paquets, il n'y a pas d'assèchement de la mémoire tampon, donc le calcul des instants de restitution réels est trivial : Le premier paquet est restitué à un instant t_{D0} = t_{P0} et le dernier paquet est restitué à un instant t_{D1} = t_{P1}.

On peut remarquer que la durée D1 de la suite restituée et bien égale à la durée de la suite émise à l'entrée du réseau 22, bien que la suite reçue ait une durée légèrement différente à cause de aléas sur la durée de transmission.

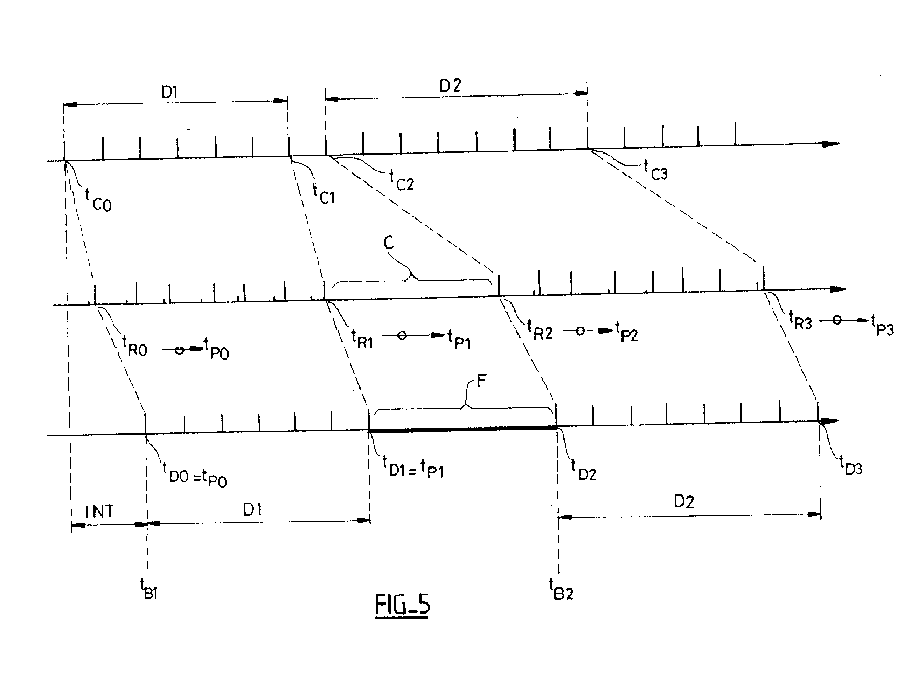

La **figure 5** représente un diagramme temporel qui illustre le fonctionnement de ce même exemple de réalisation lorsque les variations de durée de transmission sont telles que la mémoire tampon vidéo 33 s'assèche pendant un certain temps. Dans la continuité de la première suite de portions d'image, une seconde suite de portions d'images commence à être capturée et échantillonnée à l'instant t_{C2}. Une seconde suite continue de paquets de données correspondant est émise à l'entrée du réseau 22. Mais c'est le moment où le réseau 22 subit une congestion qui retarde beaucoup la transmission. Pendant un intervalle C aucun paquet n'est reçu, et la mémoire tampon vidéo 33 arrive à s'assécher. Il en résulte un intervalle F où l'image se fige sur le dispositif 25, parce qu'aucun paquet n'est restitué pendant cet intervalle F. Cet intervalle F est plus long que l'intervalle C parce que, lorsque les paquets arrivent de nouveau, il y a une période de récupération pendant laquelle la mémoire tampon 33 doit accumuler un certain nombre de paquets en réserve avant que la restitution puisse redémarrer. Ce temps de récupération est fonction des règles choisies pour la gestion de la mémoire tampon vidéo 33 en cas d'assèchement.

La seconde suite de portions d'image est capturée et échantillonnée aux instants t_{C2}, ..., t_{C3} respectivement. Les paquets de données correspondant sont reçus avec des retards variables, à des instant t_{R2}, ..., t_{R3}, éventuellement en désordre. Comme précédemment, le module 35 qui simule un lecteur multimédia calcule pour chaque paquet un instant théorique t_{P} où le paquet devrait être lu dans la mémoire tampon 33 et être affiché par le dispositif 25. L'instant t_{C} et l'instant t_{P} correspondant sont séparés d'un intervalle fixe INT. L'instant t_{P} est calculé en ajoutant à l'instant de capture et d'échantillonnage t_{C} une constante INT qui est choisie supérieure à la variation maximale de la durée de transmission à travers le réseau, qu'on souhaite compenser au moyen de la mémoire tampon.

Par exemple, le premier paquet de cette seconde suite est reçu à l'instant t_{R2} et il devrait être lu théoriquement à un instant t_{P2} = t_{C2}+ INT ; le dernier paquet de cette suite est reçu à l'instant t_{R3} et il devrait être lu théoriquement à un instant t_{P3} = t_{C3}+ INT ; où t_{C3} et t_{C2} sont donnés par les premières étiquette temporelles.

Pour le i-ème paquet de cette seconde suite, le module 35 calcule l'instant de lecture et d'affichage théorique t_{Pi} selon la formule :
t_{Pi} = t_{Ci}+ INT
où t_{Ci} est donné par la première étiquette temporelle du paquet considéré.

La troisième ligne représente les instants t_{D} où sont réellement restitués les paquets au dispositif 25 d'affichage et de reproduction sonore. Pour cette seconde suite, le premier paquet est restitué à un instant t_{D2} et le dernier paquet est restitué à un instant t_{D3}. Ces instants sont respectivement différents des instants théoriques t_{P2} et t_{P3} parce que les paquets ne sont pas disponibles à temps pour les restituer en respectant ces instants théoriques. Pour déterminer l'instant t_{D} où un paquet donné doit réellement être restitué, le module 35 calcule tout d'abord l'instant t_{B} où pourra reprendre réellement la restitution, en fonction des règles choisies pour la gestion de la mémoire tampon en cas d'assèchement (La lecture des paquets ne recommence qu'à la fin de la période de récupération en cours F).

L'instant t_{B} est constitué, dans cet exemple, par l'instant t_{D2} calculé pour l'affichage réel du premier paquet de la seconde suite, en fonction des règles choisies pour la gestion de la mémoire tampon vidéo 33 en cas d'assèchement. Le module 35 calcule ensuite un instant d'affichage réel t_{D} pour chaque paquet suivant, en prenant pour référence l'instant t_{B} où est restitué et affiché réellement le premier paquet de la seconde suite. Pour le i-ème paquet de cette seconde suite, le module 35 calcule l'instant d'affichage réel t_{Di} selon la formule : t_{Di} = t_{B} + (t_{Pi} - t_{PB})
où t_{PB} est l'instant d'affichage théorique calculé pour le premier paquet de cette seconde suite (c'est-à-dire le premier paquet restitué après la période de récupération), et où t_{Pi} est l'instant d'affichage théorique calculé pour le paquet considéré.
t_{PB} = t_{C2} + INT et t_{Pi} = t_{Ci} + INT
et t_{B} est nommé t_{B2} dans cet exemple, donc :
t_{Di}= t_{B2} + (t_{Ci} -t_{C2}) où t_{C3} et t_{C2} sont donnés par les premières étiquette temporelles.

Dans l'exemple considéré, la restitution redémarre à un instant t_{B2} qui est égal à l'instant d'affichage réel t_{D2} calculé pour le premier paquet de la seconde suite. L'instant d'affichage réel pour le dernier paquet de la seconde suite est donc :
t_{D3} = t_{B2} + (t_{P3} -t_{P2}) où t_{P2} = t_{C2} + INT et t_{P3} = t_{C3} + INT,
t_{C3} et t_{C2} étant donnés par les premières étiquette temporelles.

Cette formule de calcul t_{Di} = t_{B} + (t_{Pi} - t_{PB}) est valable aussi dans le cas où il n'y a pas d'assèchement, si on considère que t_{B} est l'instant où a commencé ou recommencé la restitution. Dans l'exemple de la figure 4 (démarrage sans qu'il y ait eu un assèchement), l'instant t_{B} est l'instant d'affichage réel t_{D1} calculé pour le premier paquet de la première suite.

Le module logiciel 36 qui simule les états d'un lecteur multimédia mémorise deux informations temporelles :
-- t_{B} qui est l'instant où a (re)commencé la restitution, ce paramètre t_{B} étant réactualisé chaque fois que la restitution redémarre après un assèchement de la mémoire tampon.
-- t_{P2} qui est l'instant théorique d'affichage calculé pour le premier paquet par lequel a (re)commencé la restitution en cours.

## Revendications

1. Outil de simulation du comportement d'un terminal recevant un signal transmis sous la forme de paquets en mode continu, **caractérisé en ce qu'**il comporte :
- des moyens (23) pour simuler plusieurs transmissions successives identiques, comportant :
-- des moyens pour recevoir un signal réellement transmis, à travers un réseau (22), sous la forme de paquets de données en mode continu, ces paquets étant affectés par des variations du temps de transmission à travers ce réseau (22),
-- des moyens pour stocker tous les paquets reçus en associant à chaque paquet une première étiquette temporelle (t_{Ci}) indiquant l'instant où a été capturé et échantillonné une portion de signal, et une seconde étiquette temporelle (t_{Ri}) indiquant à quel instant ce paquet est sorti dudit réseau,
-- et des moyens pour lire tous les paquets stockés, en reconstituant, grâce aux premières et secondes étiquettes temporelles, les mêmes variations de durée de transmission que pendant la transmission réelle ;
- des moyens pour simuler une mémoire tampon destinée à stocker des paquets en associant chaque paquet à la première étiquette temporelle (t_{Ci}) indiquant l'instant où a été capturé et échantillonné une portion de signal, ces moyens comportant des paramètres réglables pour définir la capacité de la mémoire tampon et définir des règles pour la récupération consécutive à un assèchement de la mémoire tampon,
- et des moyens (35-37) pour simuler un lecteur lisant dans cette mémoire tampon, comportant :
-- des moyens (35) pour calculer pour chaque paquet reçu un instant théorique (t_{Pi}) où il devrait être restitué par cette mémoire tampon, en respectant l'ordre et la cadence définis par les premières étiquettes temporelles ;
-- des moyens (35) pour calculer un instant (t_{B}) où devra être restitué réellement le premier paquet à restituer juste après le démarrage de la lecture ou juste après une période de récupération consécutive à un assèchement de la mémoire tampon, en fonction de règles de fonctionnement prédéterminées pour la mémoire tampon à simuler ;
-- et des moyens (35) pour calculer, pour chaque paquet suivant le premier paquet à restituer juste après le démarrage de la lecture ou juste après une période de récupération, un instant (t_{Di}) où il devra être restitué réellement par cette mémoire tampon, en respectant l'ordre et la cadence définis par les premières étiquettes temporelles.

2. Outil de simulation selon la revendication 1 **caractérisé en ce que** lesdits moyens moyens pour lire tous les paquets stockés en reconstituant, grâce aux premières et secondes étiquettes temporelles, les mêmes variations de durée de transmission que pendant la transmission réelle comportent des moyens pour fournir chaque paquet stocké auxdits moyens (33) pour simuler une mémoire tampon, en retardant ce paquet avec un retard relatif qui est égal de la différence entre la seconde étiquette temporelle (t_{Ri}) et la première étiquette temporelle (t_{Ci}) associées à ce paquet.

3. Outil de simulation selon la revendication 1 **caractérisé en ce que** lesdits moyens (35) pour calculer, pour chaque paquet reçu, un instant théorique (t_{Pi}) où il devrait être restitué par cette mémoire tampon, en respectant l'ordre et la cadence définis par les premières étiquettes temporelles (t_{Ci}), comportent des moyens pour additionner une constant (INT) à la valeur de la première étiquette temporelle (t_{Ci}) associée à ce paquet.

4. Outil de simulation selon la revendication 1 **caractérisé en ce que** les moyens (35) pour calculer, pour chaque paquet suivant le premier paquet à restituer juste après le démarrage de la lecture ou juste après une période de récupération, un instant (t_{Di}) où il devra être restitué réellement par cette mémoire tampon, en respectant l'ordre et la cadence définis par les premières étiquettes temporelles (t_{Ci}), comportent des moyens pour calculer cet instant selon la formule : t_{Di} = t_{B} + (t_{Pi} - t_{PB})
où t_{PB} est l'instant d'affichage théorique calculé pour ledit premier paquet, où t_{Pi} est l'instant d'affichage théorique calculé pour le paquet considéré, et où t_{B} est l'instant où a (re)commencé la restitution, t_{B} étant réactualisé chaque fois que la restitution redémarre après un assèchement de la mémoire tampon.
